# EUROPÄISCHE PATENTANMELDUNG

(11) **EP 1 844 647 A1**
(43) Veröffentlichungstag der Anmeldung: **17.10.2007**
(21) Anmeldenummer: 06118361.2
(22) Anmeldetag: 03.08.2006
(51) Int. Cl.: A01G 7/02, A01G 1/00, A01G 9/18

(54) **Verfahren und Vorrichtung zur Wachstumsbeschleunigung**

(30) Priorität: 13.04.2006 DE 102006017813
(71) Anmelder: Linde AG, 82049 Hollriegelskreuth (DE)
(72) Erfinder: Krabbendam, Peter, 2046 AA Haarlem (NL); Oudshoorn, Felix Peter, 1113 GS Diemen (NL)
(74) Vertreter: Ganahl, Bernhard

(57) **Zusammenfassung**

Die vorliegende Erfindung betrifft ein Verfahren zur Wachstumsbeschleunigung und Regeneration von Rasenflächen, wobei die Rasenfläche (2) zumindest teilbereichsweise oberseitig durch einen nach unten offenen allseitig umschlossenen Raum (4) umschlossen wird und wobei in den Raum (4) CO₂ eingeleitet wird und die vom Raum (4) überdeckte Rasenfläche (2) mit einer Beleuchtungseinrichtung (14) mit Licht beaufschlagt wird und eine Vorrichtung zur Durchführung des Verfahrens.

## Beschreibung

Die Erfindung betrifft ein Verfahren und eine Vorrichtung zur Wachstumsbeschleunigung von Rasen, insbesondere in Fußballstadien und dergleichen.

Während Fußballstadien und Sportarenen in früheren Zeiten noch häufig unüberdachte Tribünen besaßen, welche mit einem relativ sanften Steigungswinkel und mit einer gewissen Entfernung zu einem Rasenspielfeld angeordnet waren, beispielsweise getrennt durch Laufbahnen und Leichtathletik-Sporteinrichtungen, geht ein Trend dahin, die Tribünen bis an den Spielfeldrand von Fußballfeldern zu bauen, die Tribünen relativ steil anzuordnen, um dem Publikum einen guten Blick auf das Spielfeld zu ermöglichen und zudem derartige Fußballstadien zumindest im Bereich der Tribünen, zum Teil jedoch auch vollständig, zu überdachen.

Bei diesen modernen Fußballstadien ist durch die Überdachung einerseits und dadurch, dass, wenn überhaupt, nur ein Bereich direkt über dem Rasen unüberdacht ist, der Lichteinfall und die Lichtintensität außerordentlich begrenzt.

Insbesondere in den Wintermonaten, in denen der Rasen auf Grund der Temperatur kaum wächst, denn übliche, den Rasen ausbildende Grassorten wachsen unter 5° C Lufttemperatur kaum noch, werden derartige Sportrasen außerordentlich stark beansprucht.

Da insbesondere im Bereich des Profifußballes die Frequenz der Spiele steigt, ist im Winter teilweise jedoch auch schon im Sommer die Regenerationsfähigkeit der Graspflanzen nicht mehr so hoch, dass die Schädigungen durch den Spielbetrieb ausgeglichen werden könnten.

Es ist deshalb bekannt, derartige rasenbildende Graspflanzen landwirtschaftlich anzubauen und entsprechend als Rasen zu konditionieren, den Rasen bei Bedarf abzutragen und in Rollen aufzurollen und in Fußballstadien einzulegen, nachdem dort die entsprechende Rasennutzschicht entfernt wurde.

Hierbei ist von Nachteil, dass der Ausbau einer geschädigten Rasenfläche und der Einbau einer neuen Rasenfläche außerordentlich kostspielig sind. Oftmals besteht das Problem, dass eine neue Rasenfläche unter den im Stadion herrschenden Bedingungen das Wachstum einstellt.

Um die Regenerationsfähigkeit eines Rasens zu erhöhen, ist es bekannt, über den Rasen Bahnen zu ziehen, in denen Leuchtdioden enthalten sind. Dieses von der Firma Intravision unter der Handelsbezeichnung "Lumigren" am Markt erhältliche System besteht im Wesentlichen aus einem Schienensystem, auf dem die Stoffbahnen mit integrierten Leuchtdioden ausgerollt werden können und einem Belüftungssystem, das eine Luftzirkulation bewirkt.

Die Firma SGL, Waddinxveen, Niederlande führt ein Rasenmanagement durch, bei welchem das Wachstum des Rasens, das auf den Rasen einwirkende Licht, die Temperatur, die Wasserzufuhr, der Düngereintrag und das Mähen gemessen werden. Die einzelnen Wachstumsparameter werden individuell verändert. Gegebenenfalls wird der Rasen künstlich beleuchtet.

Dieses System verbessert zwar die Lichtversorgung der Graspflanzen. Insbesondere im Winter kann jedoch ein stark geschädigter Rasen hiermit nicht mehr regeneriert werden.

Aufgabe der Erfindung ist es, ein Verfahren zur Wachstumsbeschleunigung und Regeneration eines Rasens zu schaffen, mit dem hohe Wachstums- und Regenerationsphasen auch im Winter möglich sind.

Die Aufgabe wird mit einem Verfahren mit den Merkmalen des Anspruch 1 gelöst.

Vorteilhafte Weiterbildungen sind in den hiervon abhängigen Unteransprüchen gekennzeichnet.

Eine weitere Aufgabe ist es, eine Vorrichtung zur Durchführung des Verfahrens zu schaffen, die einfach, schnell und kostengünstig herstellbar ist, eine effektive Anwendung des Verfahrens ermöglicht und leicht zu handhaben ist.

Die Aufgabe wird mit einer Vorrichtung mit den Merkmalen des Anspruch 8 gelöst.

Vorteilhafte Weiterbildungen sind in den hiervon abhängigen Unteransprüchen angegeben.

Das erfindungsgemäße Verfahren sieht vor, über einer begrenzten Rasenfläche einen abgeschlossenen Raum zu errichten, wobei in dem abgeschlossenen Raum Beleuchtungseinrichtungen vorhanden sind, welche den unter der Beleuchtungseinrichtung befindlichen Rasen beleuchten. Die Beleuchtung wird hierbei vorzugsweise mit einer Wellenlänge durchgeführt, die in besonders guter Weise die Photosynthese der den Rasen ausbildenden Graspflanzen fördert. Insbesondere geeignet sind hierfür Quecksilberdampflampen, gegebenenfalls mit entsprechenden Filtern, oder Leuchtstoffröhren mit dem entsprechenden Lichtspektrum.

Darüber hinaus wird in den abgeschlossenen Raum CO₂ eingeleitet, wobei die CO₂-Konzentration in dem abgeschlossenen Raum permanent überwacht wird und die CO₂-Zuleitung entsprechend gesteuert wird.

Durch das Vorhandensein von CO₂ wird die mittels des Lichtes eingebrachte Wärme besser zurückgehalten ("Treibhauseffekt"), wodurch die Erwärmung im abgeschlossenen Raum unterstützt wird.

Da alle modernen Fußballstadien und alle modernen Sportstätten, die einen Sportrasen besitzen, über eine entsprechende Rasenheizung verfügen, werden die Größe bzw. das Volumen des abgeschlossenen Raumes so gewählt, dass in einer hinreichenden Zeit das Raumvolumen von der Rasenheizung auf eine Temperatur derart aufgewärmt wird, dass ein Wachstum der den Rasen ausbildenden Graspflanzen möglich ist. Zudem kann die Erwärmung allein oder zusätzlich durch die Abwärme der Beleuchtungseinrichtung bewerkstelligt werden.

Beim Vorhandensein einer Rasenheizung oder der Abwärme der Beleuchtungseinrichtung kann zudem auf Umwälzmittel zum Umwälzen des eingespeisten Kohlendioxids verzichtet werden, da sich diese Umwälzung durch Konvektion vollzieht.

Vorzugsweise werden die Leuchtmittel in einer Höhe von 1,80 m bis 2,80 m über der Rasenfläche angeordnet.

Das CO₂ kann am obersten Punkt oder im obersten Bereich des Raumes eingespeist und fällt durch sein im Vergleich zu Luft höheres Gewicht nach unten.

Bevorzugt handelt es sich bei dem umschlossenen Raum um ein Zelt oder zeltartiges Gebilde aus einer im Wesentlichen gasdichten Zeltwand, die von einem oberen Bereich oder einem Zeltdach oder einer Zeltdachwandung bis auf den Rasen reicht.

Um Gasverluste zu verhindern und auch Temperaturverluste klein zu halten, ist die Zeltwandung beispielsweise aus einer Folie gegebenenfalls in Kombination mit einer textilen reißfesten Schicht ausgebildet.

Bei einer bevorzugten Ausführungsform besitzt die Zeltwandung isolierende Eigenschaften, in dem sie eine Schaumstoff-Folienschicht umfasst oder zwischen einer inneren Folienwandung und einer äußeren Folienwandung Luftkammern angeordnet sind.

Bevorzugt kann das Zelt an einer unteren, auf dem Rasen stehenden Kante verstärkt ausgebildet sein, wobei nach unten reichend umlaufende klingenartige Elemente in den Untergrund eingreifen und so einen sicheren Stand und eine gute Abdichtung ermöglichen.

Das Verfahren sieht zudem vor, einen derartigen umschlossenen Raum oder mehrere dieser umschlossenen Räume auf einer Rasenfläche aufzustellen, auf den Rasen die Beleuchtung und das CO₂ einwirken zu lassen und nach einer hinreichenden Einwirkungszeit das Zelt zu versetzen. Hierzu können erfindungsgemäß neben einer manuellen Versetzung auch eine automatisierte Versetzung mit einem Schienensystem und/oder Seilzugsystem verwendet werden. Bei einer solchen Ausführungsform kann anstelle einer Verankerung des Raumes auf dem Boden an der Unterseite Rollen vorhanden sein, mit denen der umschlossene Raum über den Rasen gezogen werden kann. Hierfür sind allerdings auch Kufen oder Schienen denkbar.

Die Erfindung wird anhand einer Zeichnung beispielhaft erläutert. Es zeigen dabei:

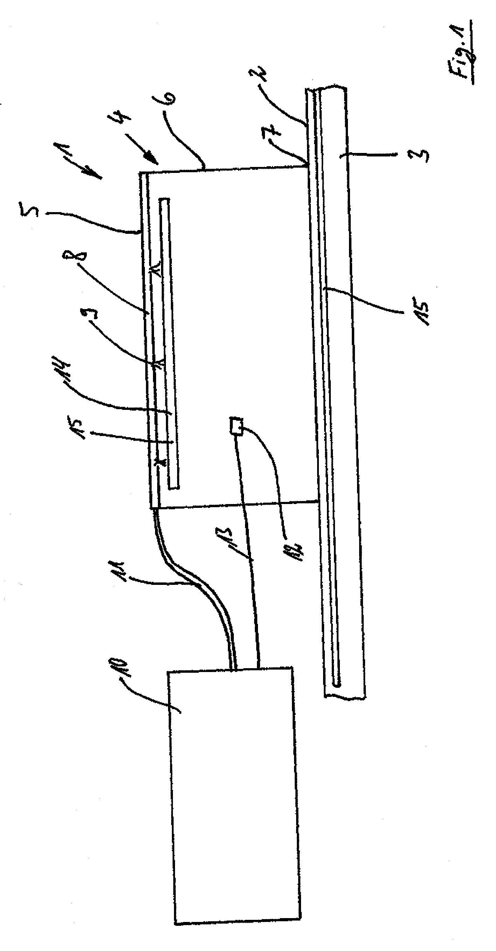

- Figur 1:: die erfindungsgemäße Vorrichtung in einem Längsschnitt;
- Figur 2:: die erfindungsgemäße Vorrichtung stark schematisiert in einem Querschnitt.

Die erfindungsgemäße Vorrichtung 1 ist auf einem zu regenerierenden Rasen 2 angeordnet, der auf einem Untergrund 3 wächst.

Die Vorrichtung 1 umfasst einen umschlossenen Raum 4 mit einer Deckenwandung 5 und Seitenwandungen 6. Die Deckenwandung 5 und die Seitenwandungen 6 sind vorzugsweise fest miteinander verbunden und besitzen gegebenenfalls eine nicht gezeigte Tragstruktur.

Der umbaute Raum 4 ist insbesondere ein Zelt 4, welches nach unten offen ist und mit Seitenwandungskanten 7 auf dem Rasen 2 aufsteht.

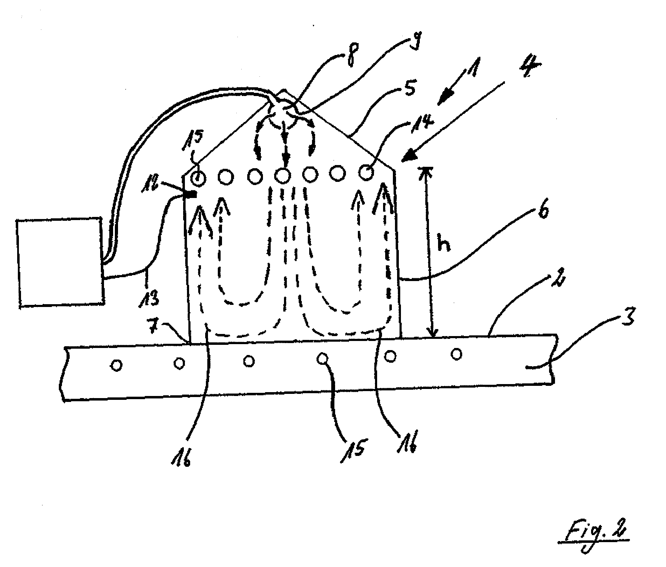

Der umschlossene Raum 4 bzw. das Zelt 4 kann quaderförmig ausgebildet sein oder ein abfallendes Pultdach oder ein Spitzdach (Fig. 2) besitzen.

In einem oberen Bereich bzw. unterhalb einer Dachwandung 5 ist eine Ausströmvorrichtung 8 für Gas vorhanden, wobei die Ausströmvorrichtung 8 beispielsweise ein rohrartiges Gebilde 8 ist, welches sich über eine Teillänge oder die gesamte Länge des Raumes 4 erstreckt. Das Rohr 8 bzw. rohrartige Gebilde 8 besitzt Ausströmöffnungen 9, aus denen ein CO₂-Gas ausströmen kann.

Das CO₂-Gas stammt aus einem Gasspeicher 10, der mit einer entsprechenden Zuführleitung 11 mit dem rohrartigen Gebilde 8 verbunden ist.

Um zudem den CO₂-Gehalt in dem umschlossenen Raum 4 bzw. dem Zelt 4 zu überwachen, ist ein CO₂-Messgerät oder ein CO₂-Sensor 12 über eine Leitung 13 vorzugsweise mit dem Gasspeicher 10 verbunden, wobei eine entsprechende Steuereinrichtung (nicht gezeigt) zum Steuern/Regeln des Gasgehaltes vorhanden ist.

In einer Höhe h vom Boden 2 bzw. Rasen 2 gemessen ist in dem umschlossenen Raum 4 bzw. in dem Zelt 4 eine Beleuchtungseinrichtung 14 vorhanden, welche beispielsweise aus Glühlampen oder Gasentladungslampen besteht. Bevorzugt werden Photosyntheselampen verwendet, wie z.B. die von General Electric Comp. hergestellten und unter der Handelsbezeichnung Lucalox PSL vertriebenen Lampen.

Bei einer Ausführungsform der Beleuchtungseinrichtung 14 besteht diese beispielsweise aus Leuchtstoffröhren 15, welche sich in dem umschlossenen Raum 4 erstrecken.

Auf Grund einer im Boden 3 unterhalb des Rasens 2 vorhanden Rasenheizung 17 kommt es innerhalb des umschlossenen Raumes 4 zu einer Zirkulation des aus dem rohrartigen Gebilde 8 ausströmenden und nach unten strömenden bzw. fallenden CO₂, wobei durch Konvektion bei einem mittigen Eintrag des CO₂ vom Dach her das CO₂ in den Randbereichen nach oben strömt (Pfeile 16 in Fig. 2).

Es wurde festgestellt, dass auch die Wärmeentwicklung der Beleuchtungseinrichtung 14 für die Ausbildung einer derartigen Konvektion völlig ausreichend ist, so dass auch in Stadien, in denen eine Rasenheizung 17 nicht vorhanden ist, eine ausreichende Konvektion sichergestellt ist.

Beim oben erläuterten Ausführungsbeispiel wird zum Zuführen des CO₂-Gases ein Rohr 8 verwendet. Es hat sich jedoch auch gezeigt, dass es im Rahmen der Erfindung möglich ist, anstelle eines solchen Rohres eine einzelne, punktförmige Düse zu verwenden, da durch die im umschlossenen Raum bestehende Konvektion für eine gleichmäßige Verteilung des CO₂-Gases gesorgt ist.

Die Beleuchtungsmittel werden in einer Höhe h von 1,80 m bis 2,80 m, bevorzugt 2,20 m bis 2,50 m, vorgesehen, wobei die CO₂-Zuleitung 8 etwa 20 bis 80 cm über den Beleuchtungsmittein vorgesehen wird.

Bei dem erfindungsgemäßen Verfahren und bei der erfindungsgemäßen Vorrichtung ist von Vorteil, dass diese sehr einfach ausgebildet ist. Durch die erfindungsgemäße gasdichte Abkapslung mittels eines umschlossenen Raumes 4 oder Zeltes 4 wird durch die Wärmeentwicklung der Leuchtmittel gegebenenfalls auch die Wärmeentwicklung durch eine Rasenheizung eine signifikante Temperaturerhöhung herbeigeführt, welche ausreicht, die den Rasen ausbildenden Graspflanzen ein Wachstum zu ermöglichen.

Durch die Wärmeentwicklung der Leuchtmittel zum Einen und gegebenenfalls einer Rasenheizung zum Anderen wird eine gleichmäßige CO₂-Konzentration durch konvektive Verteilung erzielt.

Die CO₂-Konzentration liegt im Bereich von 500 bis 1.500 ppm und vorzugsweise im Bereich von 800 bis 1.200 ppm.

Mit dem erfindungsgemäßen Verfahren und der erfindungsgemäßen Vorrichtung wird selbst in kalten Wintermonaten und bei hoher Belastung der Rasenfläche in einfacher Weise durch eine höhere Lichtintensität als bei Tageslicht und eine hohe CO₂-Konzentration bei ausreichenden hohen Temperaturen optimale Bedingungen für den Rasen erzielt.

Die Erfinder konnten selbst in den Wintermonaten ein Wachstum von etwa 0,5 mm pro Stunde der den Rasen ausbildenden Graspflanzen beobachten. Die Außentemperaturen betrugen hierbei etwa 5°C bis 6°C. Die im Rasen gemessenen Temperaturen waren deutlich höher. Dies lag zum einem daran, dass eine Bodenheizung verwendet wurde. Jedoch hat auch der Wärmeeintrag durch die Lampen und die wärmerückhaltende Wirkung durch das Zelt und die CO₂-Konzentration zur Temperaturerhöhung im Rasen beigetragen. So wurde eine Temperatur von 21°C im Rasen erzielt.

Die erfindungsgemäßen Zelte 4 bzw. umbauten Räume 4 haben etwa eine Grundfläche von 10 x 30 m bis 15 x 30 m bzw. von 30 m² bis 400 m². Kleinere Zelte 4 werden verwendet, um lokal sehr beanspruchte Bereiche, wie z.B. den Bereich um das Tor zu pflegen.

Erfindungsgemäß ist es vorgesehen, dass das System bzw. die Vorrichtung oder das Verfahren an einem bestimmten Ort vier bis zwölf Stunden aufgestellt und betrieben wird und dann umgesetzt wird, um an einem nächsten Ort weiterbetrieben zu werden.

### Bezugszeichenliste:

- 1: erfindungsgemäße Vorrichtung
- 2: Rasen
- 3: Untergrund
- 4: Umschlossener Raum/Zelt
- 5: Deckenwandung
- 6: Seitenwandungen
- 7: Seitenwandungskanten
- 8: Ausströmvorrichtung
- 9: Ausströmöffnungen
- 10: Gasspeicher
- 11: Zuführleitung
- 12: CO₂-Sensor
- 13: Leitung
- 14: Beleuchtungseinrichtung
- 15: Leuchtstoffröhren
- 16: Pfeile
- 17: Rasenheizung

## Patentansprüche

1. Verfahren zur Wachstumsbeschleunigung und Regeneration von Rasenflächen, wobei die Rasenfläche (2) zumindest teilbereichsweise oberseitig durch einen nach unten offenen allseitig umschlossenen Raum (4) umschlossen wird und wobei in den Raum (4) CO₂ eingeleitet wird und die vom Raum (4) überdeckte Rasenfläche (2) mit einer Beleuchtungseinrichtung (14) mit Licht beaufschlagt wird.

2. Verfahren nach Anspruch 1, **dadurch gekennzeichnet, dass** das CO₂ im höchsten Bereich des Raumes (4) eingeleitet wird.

3. Verfahren nach Anspruch 1 oder 2, **dadurch gekennzeichnet, dass** das CO₂ im Raum (4) durch Konvektion durch die Abwärme der Beleuchtungseinrichtung (14) oder einer Rasenheizung (17) verteilt wird.

4. Verfahren nach einem der vorhergehenden Ansprüche, **dadurch gekennzeichnet, dass** der Gasgehalt im Raum (4) auf 500 bis 1.500 ppm CO₂ eingestellt wird.

5. Verfahren nach einem der vorhergehenden Ansprüche, **dadurch gekennzeichnet, dass** die Gaskonzentration gemessen wird und die Gaszufuhr geregelt wird.

6. Verfahren nach einem der vorhergehenden Ansprüche, **dadurch gekennzeichnet, dass** die Größe des umbauten Raumes (4) derart eingestellt wird, dass sich bei einer Standzeit von vier bis zwölf Stunden innerhalb des umbauten Raumes (4) eine Temperatur von mindestens 6° C einstellt.

7. Verfahren nach einem der vorhergehenden Ansprüche, **dadurch gekennzeichnet, dass** die innerhalb des umbauten Raumes (4) vorhandene Luft zusätzlich mit Heizeinrichtungen aufgeheizt wird.

8. Vorrichtung zur Wachstumsbeschleunigung und Regeneration von Rasenflächen umfassend einen nach unten offenen, auf einer Rasenfläche (2) aufstellbaren abgeschlossenen Raum (4), wobei in dem Raum (4) eine Beleuchtungseinrichtung (14) für eine zu beleuchtende Rasenfläche (2) vorhanden ist und zudem eine Ausströmvorrichtung (8) für CO₂-Gas vorhanden ist, welche CO₂ aus einem Gasspeicher (10) in den Raum (4) ausströmend angeordnet ist.

9. Vorrichtung nach Anspruch 8, **dadurch gekennzeichnet, dass** die Leuchtmittel in einer Höhe von 1,80 m bis 2,80 m über der Rasenfläche angeordnet sind.

10. Vorrichtung nach Anspruch 8 oder 9, **dadurch gekennzeichnet, dass** die CO₂-Ausströmvorrichtung (8) oberhalb der Beleuchtungseinrichtung (14) angeordnet ist.

11. Vorrichtung nach einem der Ansprüche 8 bis 10, **dadurch gekennzeichnet, dass** die Ausströmvorrichtung (8) im höchsten Bereich oder am höchsten Punkt des geschlossenen Raumes (4) angeordnet ist.

12. Vorrichtung nach einem der Ansprüche 8 bis 11, **dadurch gekennzeichnet, dass** der umschlossene Raum (4) ein Zelt (4) oder zeltartiges Gebilde (4) aus einer im Wesentlichen gasdichten Zeltwand ist.

13. Vorrichtung nach einem der Ansprüche 8 bis 12, **dadurch gekennzeichnet, dass** die Zeltwandung eine gasdichte Folie umfasst.

14. Vorrichtung nach einem der Ansprüche 8 bis 13, **dadurch gekennzeichnet, dass** die Zeltwandung eine textile, insbesondere reißfeste Schicht umfasst.

15. Vorrichtung nach einem der Ansprüche 8 bis 14, **dadurch gekennzeichnet, dass** die Zeltwandung isolierend ausgebildet ist mit einer Schaumstoff-folienschicht und/oder einer zwischen zwei Folienwandungen angeordneten Luftkammern.

16. Vorrichtung nach einem der Ansprüche 8 bis 15, **dadurch gekennzeichnet, dass** die Zeltwandung eine Luftpolsterfolie umfasst.

17. Vorrichtung nach einem der Ansprüche 8 bis 16, **dadurch gekennzeichnet, dass** der geschlossene Raum (4) oder das Zelt (4) an einer unteren, auf dem Rasen (2) aufstehenden Kante verstärkt ausgebildet ist, wobei nach unten reichend umlaufend klingenartige Elemente vorhanden sind, welche in den Untergrund eingreifen zur Herbeiführung einer Gasdichtigkeit.

18. Vorrichtung nach einem der Ansprüche 8 bis 17, **dadurch gekennzeichnet, dass** die Vorrichtung den umschlossenen Raum (4) mit einer Deckenwandung (5) und Seitenwandungen (6) umfasst, wobei die Deckenwandung (5) und die Seitenwandungen (6) fest miteinander und insbesondere gasdicht verbunden sind.

19. Vorrichtung nach einem der Ansprüche 8 bis 18, **dadurch gekennzeichnet, dass** die Ausströmvorrichtung (8) ein rohrartiges Gebilde (8) ist, welches sich über eine Teillänge oder die gesamte Länge des Raumes (4) erstreckt, wobei das Rohr (8) bzw. rohrartige Gebilde (8) Ausströmöffnungen (9) besitzt, aus denen ein CO₂-Gas ausströmen kann.

20. Vorrichtung nach einem der Ansprüche 8 bis 19, **dadurch gekennzeichnet, dass** zudem ein Gasspeicher (10) zur Bevorratung von CO₂-Gas vorhanden ist, der mit einer entsprechenden Zuführleitung (11) mit dem rohrartigen Gebilde (8) verbunden ist, wobei in dem umschlossenen Raum (4) bzw. dem Zelt (4) zur Überwachung des CO₂-Gehaltes ein CO₂-Messgerät oder ein CO₂-Sensor (12) vorhanden ist, welcher über eine Leitung (13) mit dem Gasspeicher (10) oder einer separaten Einrichtung zum Steuern/Regeln des Gasgehaltes verbunden ist und die Vorrichtung zum Steuern/Regeln des Gasgehaltes die Entnahme von CO₂-Gas aus dem Gasspeicher (10) regelnd ausgebildet ist.

21. Vorrichtung nach einem der Ansprüche 8 bis 20, **dadurch gekennzeichnet, dass** die Beleuchtungseinrichtung (14) aus Glühlampen und/oder Gasentladungslampen und/oder Metalldampflampen und/oder Leuchtstoffröhren (15) besteht.

22. Vorrichtung nach einem der Ansprüche 8 bis 21, **dadurch gekennzeichnet, dass** der umbaute bzw. geschlossene Raum (4) eine Grundfläche von 5 m x 6 m bis 20 m x 40 m umfasst.

23. Vorrichtung nach einem der Ansprüche 8 bis 21, **dadurch gekennzeichnet, dass** der umbaute bzw. geschlossene Raum (4) eine Grundfläche von 30 m² bis 400 m² umfasst.

24. Verfahren nach einem der Ansprüche 1 bis 7, **dadurch gekennzeichnet, dass** eine Vorrichtung nach einem der Ansprüche 8 bis 23 verwendet wird.
